# EUROPÄISCHE PATENTSCHRIFT

(11) **EP 1 192 374 B1**
(45) Veröffentlichungstag und Bekanntmachung des Hinweises auf die Patenterteilung: **16.06.2004**
(21) Anmeldenummer: 01919202.0
(22) Anmeldetag: 16.03.2001
(51) Int. Cl.: F16K 15/02, F16K 17/04

(54) **VORRICHTUNG ZUR DRUCKREGELUNG**
DEVICE FOR CONTROLLING PRESSURE
DISPOSITIF DE REGULATION DE PRESSION

(30) Priorität: 17.03.2000 DE 10013448
(43) Veröffentlichungstag der Anmeldung: 03.04.2002
(73) Patentinhaber: ROBERT BOSCH GMBH, 70442 Stuttgart (DE)
(72) Erfinder: ITTLINGER, Ralph, 71287 Weissach (DE); BUESER, Wolfgang, 71691 Freiberg (DE); DRUTU, Lorenz, 71696 Möglingen (DE)
(86) Internationale Anmeldenummer: PCT/DE2001/001019
(87) Internationale Veröffentlichungsnummer: WO 2001/069112

(56) Entgegenhaltungen:
- DE-C- 644 006
- US-A- 4 637 430
- US-A- 4 821 954
- US-A- 5 139 047

## Beschreibung

### Stand der Technik

Die Erfindung geht aus von einer Vorrichtung zur Druckregelung nach der Gattung des Hauptanspruchs.

Bei gattungsgemäßen Vorrichtungen wird ein axial beweglicher Schließkörper mittels einer zum Schließkörper koaxial angeordneten Schraubenfeder gegen den zugeordneten Ventilsitz vorgespannt. Aufgrund der Instabilität von Schraubenfedern in transversaler Richtung ist ein Ausgleichsmittel zur Kompensation eines daraus resultierenden Fedemschiefstands erforderlich, da sich sonst ein unkontrolliertes seitliches Kippverhalten des benachbart angeordneten Schließkörpers einstellen würde, was zu einem undefinierten Ansprechverhalten der Vorrichtung führen würde.
Aus der GB 14 63 217 ist eine derartige Vorrichtung bereits bekannt. Dabei ist zwischen dem Schließkörper und dem zugeordneten Ventilsitz ein Ausgleichsmittel axial zwischengeordnet, um einen Schiefstand der Schraubenfeder und eine daraus resultierende transversale Kippneigung des Schließkörpers auszugleichen. Unbefriedigend bei diesem Stand der Technik ist jedoch, daß ein formschlüssiger Kontakt zwischen dem Ausgleichsmittel und dem Schließkörper erforderlich ist, was eine paßgenaue und daher kostenaufwendige Fertigung erfordert. Da sich zudem das Ausgleichsmittel in permanentem Eingriff mit dem dem Schließkörper zugeordneten Ventilsitz befindet, erhöht sich in Offenstellung des Schließkörpers der Strömungswiderstand am Ventilsitz in unerwünschter Weise.

### Vorteile der Erfindung

Die erfindungsgemäße Vorrichtung gemäß den in Anspruch 1 definierten Merkmalen hat demgegenüber den Vorteil, daß aufgrund der in radialer Richtung vorgesehenen Abstützung des Ausgleichsmittels an der Innenwandung des Gehäuses die von der unter Vorspannung stehenden Schraubenfeder erzeugten radialen Kraftkomponenten aufgenommen und kompensiert werden, so daß lediglich die von der Schraubenfeder in axialer Richtung erzeugten Komponenten von dem Ausgleichsmittel weitergeleitet werden. Durch die Anordnung des Ausgleichsmittels zwischen Schraubenfeder und Schließkörper bleibt zudem der Strömungswiderstand am Ventilsitz im wesentlichen unbeeinflußt.

Weitere vorteilhafte Weiterbildungen und Ausgestaltungen der Erfindung ergeben sich durch die in den Unteransprüchen aufgeführten Maßnahmen.

### Zeichnung

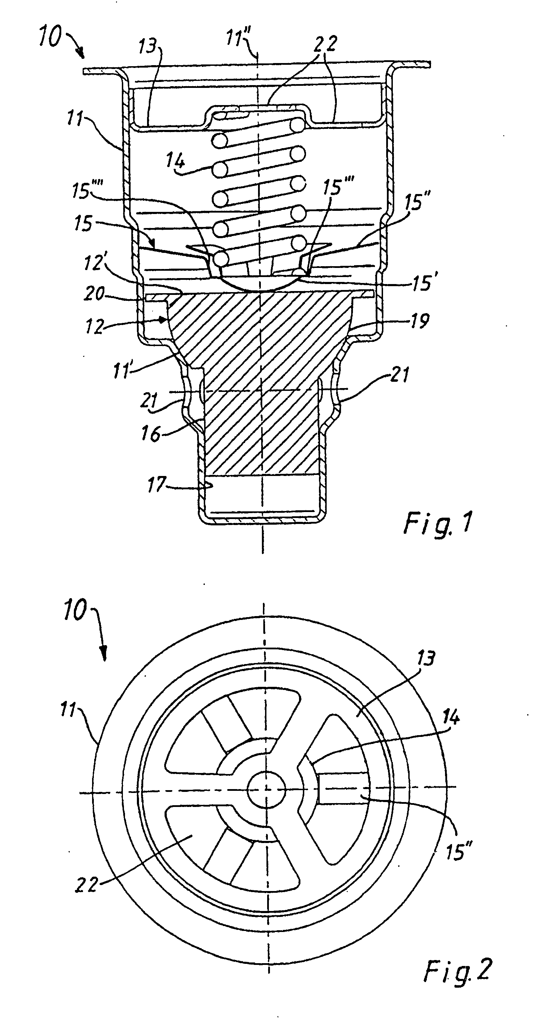

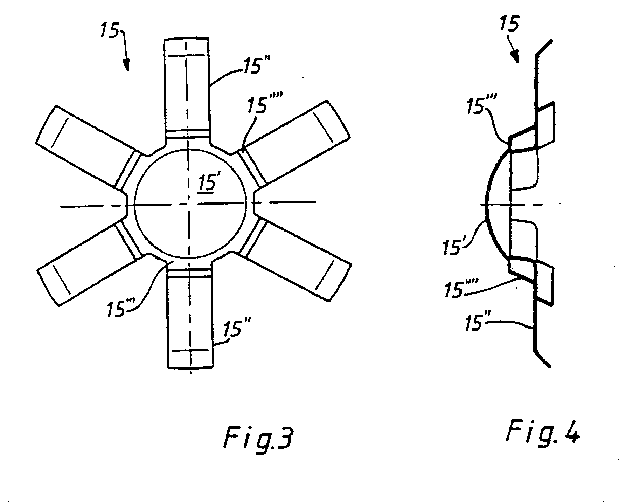

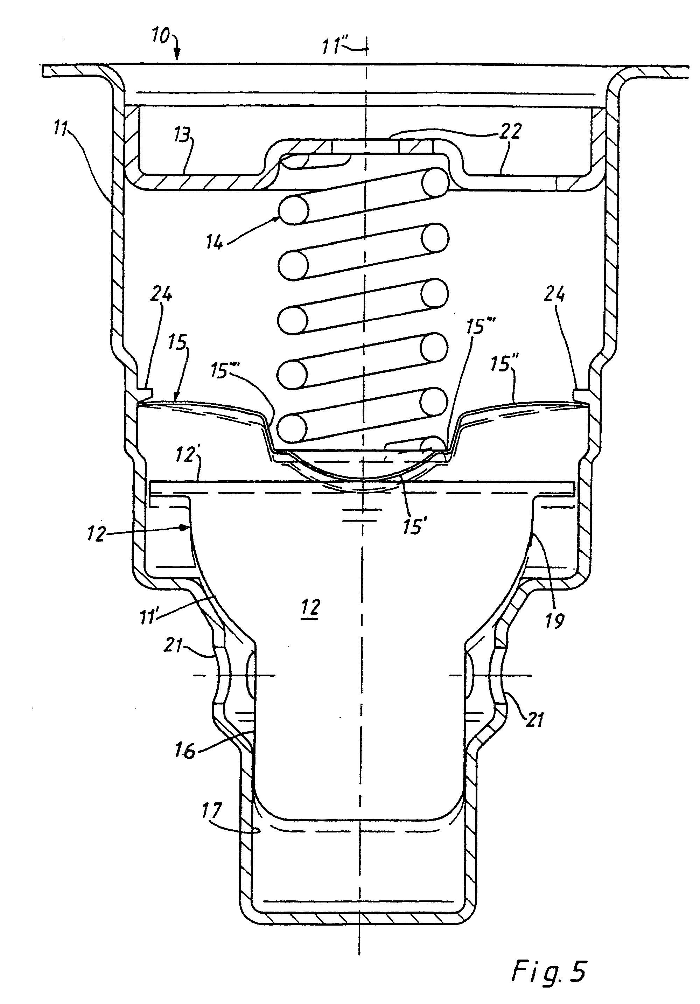

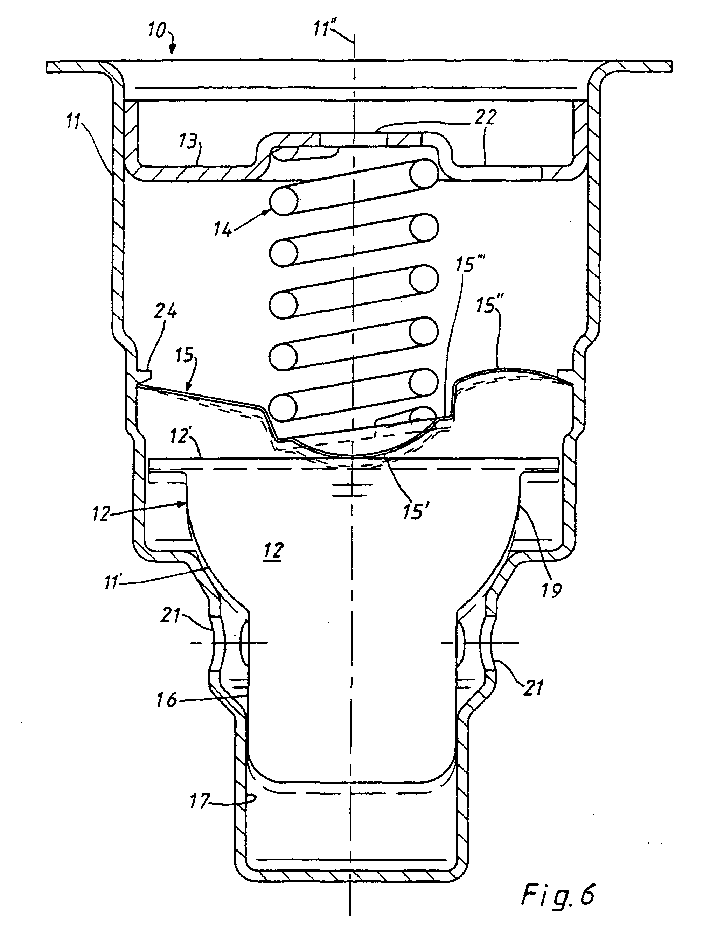

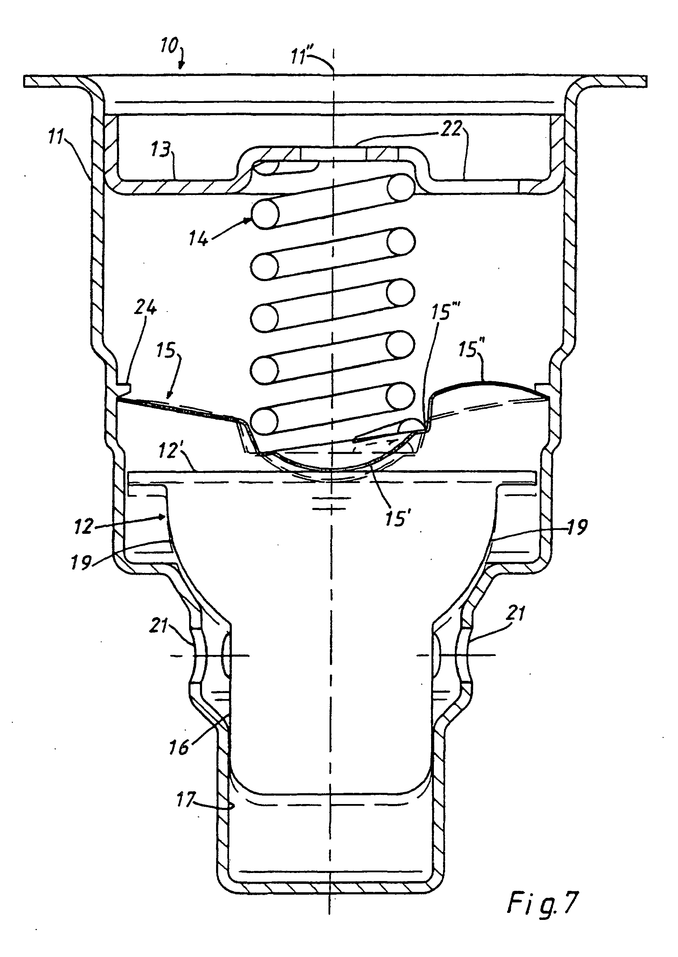

Zwei Ausführungsbeispiele der Erfindung sind in der nachfolgenden Beschreibung und Zeichnung näher erläutert. Letztere zeigt in Fig. 1 eine im Längsschnitt gehaltene Ansicht einer erfindungsgemäßen Vorrichtung, die ein Gehäuse mit einem darin aufgenommenen Schließkörper umfaßt, wobei zwischen dem Schließkörper und einem Gehäuseteil eine Schraubenfeder mit einem Ausgleichselement angeordnet ist. Fig. 2 zeigt die Vorrichtung in einer Draufsicht. Fig. 3 zeigt in einer Draufsicht das zur Vorrichtung gehörende Ausgleichselement. Fig. 4 zeigt einen Querschnitt durch das Ausgleichselement von Fig. 3. Fig. 5 zeigt in Längsschnittansicht eine zweite Ausführungsform der erfindungsgemäßen Vorrichtung, wobei gestrichelt eingezeichnete Linien für den Schließkörper und das Ausgleichselement eine geschlossene Ventilfunktion darstellen, während die durchgezogenen Linien eine geöffnete Ventilfunktion darstellen, in welcher der Schließkörper aus seinem Ventilsitz axial ausgelenkt ist. Fig. 6 zeigt in Längsschnittansicht die Kompensation eines auftretenden Federnschiefstands der Schraubenfeder durch Verbiegen des Ausgleichselementes. Fig. 7 zeigt in Längsschnittansicht den Ausgleich eines noch größeren Federschiefstands durch entsprechendes Verbiegen des Ausgleichselementes.

### Beschreibung der beiden Ausführungsbeispiele

Die in Fig. 1 in ihrer Gesamtheit mit 10 bezeichnete Vorrichtung weist ein Gehäuse 11 auf, in welchem ein Schließkörper 12 aufgenommen ist, der auf einem als Ventilsitz ausgebildeten unteren, durchmesserverjüngten Bereich 11' des Gehäuses 11 gelagert und entlang der Längsachse 11 " des Gehäuses 11 axial beweglich ist. In axialer Richtung ist zwischen dem Schließkörper 12 und einem im oberen Bereich des Gehäuses 11 als Abschlußdeckel ausgebildeten Gehäuseteil 13 eine Schraubenfeder 14 angeordnet, deren oberes Ende mit einer zentralen Ausbuchtung in dem Abschlußdeckel 13 in Verbindung steht und deren dazu entgegengesetztes unteres Ende auf einem Ausgleichselement 15 gelagert ist, das mit seinem mittigen Bereich 15' den Schließkörper 12 beaufschlagt. Dazu ist der mittige Bereich 15' des Ausgleichselementes 15 in Richtung des angrenzenden Schließkörpers 12 kalottenförmig vorgewölbt, d.h. der mittige Bereich 15' weist ungefähr die Form einer Kugelhalbschale auf, deren Hohlseite der Schraubenfeder 14 zugewandt ist, wobei vom mittigen Bereich 15' radial vorstehende Federarme 15" des Ausgleichselementes 15 sich mit ihren Enden an der Innenwand des Gehäuses 11 federnd abstützen, so daß das Ausgleichselement 15 dadurch unter transversaler Vorspannung steht. Dabei dient ein radial umlaufender ringförmiger Übergangsabschnitt 15''' zwischen dem kalottenförmigen Bereich 15' des Ausgleichselementes 15 und den davon radial abstehenden Federarmen 15" als in Einbaulage ebene Auflagefläche für das zugeordnete Ende der Schraubenfeder 14, wobei der Durchmesser des ringförmigen Übergangsabschnitts 15''' an den Durchmesser der Schraubenfeder 14 angepaßt ist. Das Ausgleichselement 15 steht mit dem Schließkörper 12 in einer beispielsweise reibschlüssigen Verbindung, da der Scheitel als Extremalpunkt des kalottenförmigen Bereichs 15' die zugewandte Anlagefläche 12' des Schließkörpers 12 beaufschlagt und zwar etwa zentral in der Längsachse 11" des Gehäuses 11. Der Schließkörper 12 ist in seinem unteren Bereich 16 zylinderförmig ausgebildet, wobei dieser Bereich 16 in einer Aufnahmebohrung 17 des Gehäuses 11 von dazu korrespondierendem Durchmesser geführt ist. Während sich das Gehäuse 11 von seinem Bodenbereich 17 nach oben hin in axialer Richtung stufenweise im Durchmesser erweitert, schließt sich an den zylinderförmigen Bereich 16 des Schließkörpers 12 nach oben ein dem Ventilsitz 11' zugeordneter kugelschichtförmiger Dichtabschnitt 19 an, der in einem radial nach außen überstehenden Kragen 20 endet. Zwischen dem Bodenbereich 17 des Gehäuses 11 und dem als Ventilsitz 11' ausgebildeten Abschnitt des Gehäuses 11 erstreckt sich ein gegenüber dem zugeordneten zylinderförmigen Bereich 16 des Schließkörpers 12 durchmessergrößerer Übergangsabschnitt mit quer zur Längsachse 11" des Gehäuses 11 angeordneten Einlaßöffnungen 21, wobei sich zwischen der Wandung des Übergangsabschnitts und dem angrenzenden zylinderförmigen Bereich 16 des Schließkörpers 12 ein annähernd ringspaltförmiger Hohlraum erstreckt. Auslaßöffnungen 22 sind im das Gehäuse 11 nach oben abschließenden Gehäuseteil 13 vorgesehen. Da der Schließkörper 12 mit seinem kugelschichtförmigen Dichtabschnitt 19 auf dem zugeordneten Ventilsitz 11' aufsitzt, befindet sich die Vorrichtung 10 in geschlossener Ventilfunktionsstellung.

Fig. 2 veranschaulicht einerseits die Lage des Abschlußdeckels 13 und andererseits die geometrische Anordnung der zum Ausgleichselement 15 gehörenden Federarme 15" innerhalb des Gehäuses 11 der Vorrichtung 10. Dazu ist der Abschlußdeckel 13 in den oberen Bereich des Gehäuses 11 eingesteckt, wobei ein radial umlaufender und hochstehender Rand an der zugeordneten Innenwandung des Gehäuses 11 anliegt. Der Abschlußdeckel 13 weist koaxial zur Längsachse 11" des Gehäuses 11 eine zentrale Auslaßöffnung 22 und drei in Umfangsrichtung beabstandet angeordnete Aussparungen als Auslaßöffnungen 22 mit zwischengeordneten speichenförmigen Streben auf. Das sich ebenfalls an der Innenwandung des Gehäuses 11 abstützende Ausgleichselement 15 weist zu diesem Zweck die in Umfangsrichtung gleichmäßig beabstandeten Federarme 15" auf.

Wie Fig. 3 veranschaulicht, sind die vom kalottenförmigen Bereich 15' des Ausgleichselements 15 zum Abstützen an der Innenwand des Gehäuses 11 radial vorstehenden Federarme 15" in Umfangsrichtung gleichmäßig beabstandet angeordnet, wobei sich im Ausführungsbeispiel sechs Federarme ergeben und somit das Ausgleichselement 15 eine sechszählige Symmetrie aufweist. Im übrigen ist im Ausführungsbeispiel das Ausgleichselement 15 aus einem blattförmigen Stahlblech geformt. Aus Fig. 4 ist ersichtlich, daß der kalottenförmige Bereich 15' eine im wesentlichen sphärische Krümmung aufweist, so daß sich somit ein Kugelschalensegment ergibt. Der kalottenförmige Bereich 15' ist von dem ringförmigen Übergangsabschnitt 15''' begrenzt, wobei zwischen dessen Umfang und dem jeweils angegliederten Federarm 15" jeweils ein kurzer stufenförmiger und schräg zur axialen Richtung nach oben verlaufender Absatz 15'''' radial angeordnet ist, der als Seitenanschlag für das bewegliche Ende der Schraubenfeder 14 dient. Die somit über den Übergangsabschnitt 15''' und den jeweiligen Absatz 15'''' an den zentralen Bereich 15' angegliederten Federarme 15" ragen annähernd rechtwinklig zum jeweils zugeordneten Absatz 15'''' radial nach außen und sind etwa sternförmig angeordnet, wobei deren Enden gemäß einer Ausführungsvariante etwas nach oben angewinkelt sind. Im nicht eingebauten Zustand des Ausgleichselements 15 sind die Federarme 15" gerade ausgebildet.

Fig. 5 veranschaulicht die Funktionsweise der erfindungsgemäßen Vorrichtung 10 anhand einer zweiten Ausführungsform, die sich von der ersten Ausführungsform gemäß der Fig. 1 bis 4 dadurch unterscheidet, daß die Innenwand des Gehäuses 11 in Höhe der dort angreifenden Federarme 15" des Ausgleichselements 15 einen radial nach innen ragenden umlaufenden Anschlagkragen 24 aufweist, an dem die Federarme 15" zur Anlage kommen. Überschreitet der über die Einlaßöffnungen 21 zugeführte Druck den auf den Schließkörper 12 mittels der Schraubenfeder 14 ausgeübten Gegendruck, so wird der Schließkörper 12 unter gleichzeitiger Kompression der Schraubenfeder 14 axial nach oben ausgelenkt, wobei sich ein Strömungskanal von den Einlaßöffnungen 21 durch den ringspaltförmigen Hohlraum hindurch und am kugelschichtförmigen Dichtabschnitt 19 mit dem daran anschließenden Kragen 20 vorbei nach oben zu den in dem Abschlußdeckel 13 vorgesehenen Auslaßöffnungen 22 erstreckt. Diese offene Ventilfunktion der Vorrichtung 10 ist anhand der durchgezogenen Linienführung für den axial verschieblichen Schließkörper 12 und das Ausgleichselement 15 in Fig. 5 gezeigt, während demgegenüber die gestrichelte Linienführung die geschlossene Ventilfunktion zeigt. Wie desweiteren aus Fig. 5 ersichtlich ist, führt bei offener Ventilfunktion die axiale Auslenkung des Schließkörpers 12 über die reibschlüssige Verbindung mit dem kalottenförmigen Bereich 15' des Ausgleichsmittels 15 zu einer geringen isotropen Verbiegung der an der Innenwand des Gehäuses abgestützten Federarme 15".

Fig. 6 veranschaulicht die Funktionsweise des Ausgleichsmittels 15 bei einem auftretenden Schiefstand der Schraubenfeder 14. Wie der jeweils gestrichelte und durchgezogene Linienverlauf für den Schließkörper 12 und das Ausgleichselement 15 in Fig. 6 zeigt, besteht dieser Schiefstand sowohl in Schließstellung als auch in Offenstellung der Vorrichtung 10. Dadurch übt das dem Schließkörper 12 zugewandte bewegliche Ende der Schraubenfeder 14 nicht nur eine axial wirkende Kraft aus, sondern auch eine Kraftkomponente in radialer Richtung. Da das bewegliche Ende der Schraubenfeder 14 den ringförmigen Bereich 15''' des Ausgleichselementes 15 beaufschlagt, führt dieser Schiefstand zu einer Verspannung des kalottenförmigen Bereichs 15', wobei die transversale bzw. radiale Kraftkomponente von den seitlich abstehenden und an der Innenwand des Gehäuses 11 abgestützten Federarmen 15' aufgenommen wird; dadurch werden die in Richtung der transversalen Verspannung orientierten Federarme 15" in stärkerem Maße verbogen als die anderen Federarme 15". Der Schiefstand des beweglichen Endes der Schraubenfeder 14 wird somit über den kalottenförmigen Bereich 15" des Ausgleichselementes 15 kompensiert. Der Krümmungsradius des kalottenförmigen Bereichs 15' ist so gewählt, daß der Drehpunkt in der Ebene der Federarme 15" liegt und somit eine Relativbewegung des im Scheitel des kalottenförmigen Bereichs 15' liegenden Angriffpunktes zwischen dem Ausgleichs-element 15 und dem angrenzenden Schließkörper 12 weitestgehend ausgeschlossen ist, so daß der durch den Scheitel des kalottenförmigen Bereichs 15' definierte Kontaktpunkt zwischen dem Ausgleichselement 15 und der angrenzenden Anlagefläche 12' des Schließkörpers 12 in der Längsachse 11". zentriert ist. Die Druckkraft der Schraubenfeder 14 wird somit axial, d.h. ohne radialen Versatz auf den Schließkörper 12 weitergeleitet. Das Ausgleichselement 15 wirkt somit als Querkraftsicherung, so daß der Schließkörper 12 unabhängig von radialen Querkräften nur in axialer Richtung und nur mittig in der Längsachse 11 " beaufschlagt wird.

Fig. 7 veranschaulicht die Funktionsweise des Ausgleichselementes 15 bei in Offenstellung der Vorrichtung 10 noch stärker auftretendem Schiefstand der Schraubenfeder 14. Während in der Schließstellung, wie die gestrichelte Linienführung zeigt, die Schraubenfeder 14 konzentrisch zur Längsachse 11", d.h. ohne Schiefstand, das Ausgleichselement 15 beaufschlagt, wobei die radial an der Innenwand des Gehäuses 11 abgestützten Federarme isotrop ausgerichtet sind, ergibt sich in der Offenstellung, wie die durchgezogene Linienführung zeigt, eine exzentrische Verschiebung des beweglichen Endes der Schraubenfeder 14 bezüglich der Längsachse 11". Dies führt wiederum zu einer entsprechenden Verspannung des kalottenförmigen Bereichs 15', wobei sich die in Richtung der Verspannung orientierten Federarme 15" entsprechend dem Betrag der Verspannung verbiegen, während die von der Richtung der Verspannung wegorientierten Federarme 15" nahezu unbeeinflußt sind, so daß sich somit ein anisotropes Antwortverhalten der Federarme 15" ergibt. Aufgrund der Ausbildung des Ausgleichselementes 15 ist somit auch ein größerer Federnschiefstand kompensierbar, so daß mit der erfindungsgemäßen Vorrichtung 10 auch Schraubenfedern mit größerem Schiefstand verwendbar sind.

## Patentansprüche

1. Vorrichtung zur Druckregelung mit einem Gehäuse (11) und einem darin aufgenommenen axial beweglichen Schließkörper (12), wobei das Gehäuse wenigstens einen Druckmitteleingang (21) und einen Druckmittelausgang (22) aufweist und der Schließkörper mittels einer Schraubenfeder (14) gegen einen Ventilsitz (11') im Gehäuse vorgespannt ist sowie wenigstens ein Ausgleichsmittel (15) für die Schraubenfeder vorgesehen ist, **dadurch gekennzeichnet, daß** als Ausgleichsmittel ein axial zwischen dem Schließkörper (12) und einem dem Schließkörper (12) zugewandten Ende der Schraubenfeder (14) angeordnetes Ausgleichselement (15) vorgesehen ist, welches sich in radialer Richtung an der Innenwand des Gehäuses (11) federnd abstützt und mit seinem zentralen Bereich (15') in Kontakt mit dem angrenzenden Schließkörper (12) steht.

2. Vorrichtung nach Anspruch 1, **dadurch gekennzeichnet, daß** der zentrale Bereich (15') des Ausgleichselements (15) kalottenförmig ausgebildet ist, wobei der Scheitel als Extremalpunkt des kalottenförmig ausgebildeten Bereichs (15') einen vorzugsweise reibschlüssigen Kontakt zum angrenzenden Schließkörper (12) bildet.

3. Vorrichtung nach Anspruch 1 oder 2, **dadurch gekennzeichnet, daß** peripher zum zentralen Bereich (15') des Ausgleichselementes (15) radial vorstehende Federarme (15") angeordnet sind.

4. Vorrichtung nach Anspruch 2 oder 3, **dadurch gekennzeichnet, daß** der Krümmungsradius des kalottenförmigen Bereichs (15') des Ausgleichselements (15) derart bemessen ist, daß der Drehpunkt etwa in einer von den Federarmen (15") aufgespannten Ebene liegt.

5. Vorrichtung nach Anspruch 3 oder 4, **dadurch gekennzeichnet, daß** die radiale Ausdehnung des Ausgleichselements (15) nach dem radialen Innendurchmesser des zugeordneten Zylindermantelabschnitts des Gehäuses (11) bemessen ist.

6. Vorrichtung nach einem der Ansprüche 2 bis 5, **dadurch gekennzeichnet, daß** der Durchmesser des kalottenförmig ausgebildeten Bereichs (15') ungefähr dem Durchmesser der Schraubenfeder (14) entspricht.

7. Vorrichtung nach einem der Ansprüche 3 bis 6, **dadurch gekennzeichnet, daß** das Ausgleichselement (15) einen ringförmigen den kalottenförmigen Bereich (15') radial umgebenden Übergangsabschnitt (15''') als ebene Anlagefläche für das dem Ausgleichselement (15) zugewandte Ende der Schraubenfeder (14) aufweist, wobei zwischen dem Umfang des Übergangsabschnitts (15''') und dem jeweils angegliederten Federarm (15') jeweils ein sich etwa axial in Richtung der Schraubenfeder (14) erstreckender stufenförmiger Absatz (15'''') angeordnet ist.

8. Vorrichtung nach einem der Ansprüche 3 bis 7, **dadurch gekennzeichnet, daß** an der dem Ausgleichselement (15) zugeordneten Innenwandung des entsprechenden Zylindermantelabschnitts des Gehäuses (11) ein radial nach innen vorstehender und umlaufender Anschlagkragen (24) für die Federarme (15") vorgesehen ist.

9. Vorrichtung nach einem der Ansprüche 3 bis 8, **dadurch gekennzeichnet, daß** das Ausgleichselement (15) sechs in Umfangsrichtung gleichmäßig angeordnete Federarme aufweist.

10. Vorrichtung nach einem der Ansprüche 1 bis 9, **dadurch gekennzeichnet, daß** das Ausgleichselement (15) einstückig ausgebildet ist.

## Claims

1. Device for pressure regulation, with a housing (11) and with an axially moveable closing body (12) received therein, the housing having at least one pressure-medium inlet (21) and one pressure-medium outlet (22), and the closing body being prestressed against a valve seat (11') in the housing by means of a helical spring (14), and also at least one compensating means (15) for the helical spring being provided, **characterized in that** what is provided as compensating means is a compensating element (15) which is arranged axially between the closing body (12) and one end, facing the closing body (12), of the helical spring (14) and which is supported resiliently in the radial direction on the inner wall of the housing (11) and with its central region (15') is in contact with the adjacent closing body (12).

2. Device according to Claim 1, **characterized in that** the central region (15') of the compensating element (15) is designed in the form of a spherical cap, the vertex, as the extreme point of the region (15') designed in the form of a spherical cap, making preferably frictional contact with the adjacent closing body (12).

3. Device according to Claim 1 or 2, **characterized in that** radially projecting spring arms (15") are arranged peripherally to the central region (15') of the compensating element (15).

4. Device according to Claim 2 or 3, **characterized in that** the radius of curvature of the region (15') of the compensating element (15) which is in the form of a spherical cap is dimensioned such that the centre of rotation lies approximately in a plane spanned by the spring arms (15").

5. Device according to Claim 3 or 4, **characterized in that** the radial extent of the compensating element (15) is dimensioned according to the radial inside diameter of the associated cylindrical casing portion of the housing (11).

6. Device according to one of Claims 2 to 5, **characterized in that** the diameter of the region (15') designed in the form of a spherical cap corresponds approximately to the diameter of the helical spring (14).

7. Device according to one of Claims 3 to 6, **characterized in that** the compensating element (15) has an annular transition portion (15'''), radially surrounding the region (15') in the form of a spherical cap, has a plane bearing surface for that end of the helical spring (14) which faces the compensating element (15), a step-shaped shoulder (15'''') extending approximately axially in the direction of the helical spring (14) being arranged in each case between the circumference of the transition portion (15''') and the respectively attached spring arm (15').

8. Device according to one of Claims 3 to 7, **characterized in that** a radially inward-projecting and continuous stop collar (24) for the spring arms (15") is provided on the inner wall, assigned to the compensating element (15), and the corresponding cylindrical casing portion of the housing (11).

9. Device according to one of Claims 3 to 8, **characterized in that** the compensating element (15) has six spring arms arranged uniformly in the circumferential direction.

10. Device according to one of Claims 1 to 9, **characterized in that** the compensating element (15) is produced in one piece.

## Revendications

1. °) Dispositif de régulation de pression comportant un boîtier (11) ainsi qu'un corps de fermeture (12) mobile axialement et logé à l'intérieur, le boîtier présentant au moins une entrée de fluide de pression (21) et une sortie de fluide de pression (22), dans lequel le corps de fermeture est précontraint contre un siège de soupape (11') dans le boîtier au moyen d'un ressort à boudin (14), avec au moins un moyen de compensation ( 15) pour le ressort à boudin,
**caractérisé en ce qu'**
en tant que moyen de compensation, un élément de compensation (15) disposé de façon axiale entre le corps de fermeture (12) et une extrémité du ressort à boudin (14) tournée vers le corps de fermeture (12), s'appuie en direction radiale de façon élastique contre la paroi intérieure du boîtier (11) en étant, avec sa zone centrale (15'), en contact avec le corps de fermeture (12) attenant.

2. Dispositif selon la revendication 1,
**caractérisé en ce que**
la zone centrale (15') de l'élément de compensation (15) est configurée en forme de calotte, dont le sommet, en tant que point d'extrémité de la zone configurée en forme de calotte (15'), est en contact de préférence par frottement avec le corps de fermeture (12) attenant.

3. Dispositif selon la revendication 1 ou 2,
**caractérisé en ce que**
des bras élastiques (15"), qui s'étendent de façon radiale, sont disposés à la périphérie de la zone centrale (15') de l'élément de compensation (15).

4. Dispositif selon la revendication 2 ou 3,
**caractérisé en ce que**
le rayon de courbure de la zone en forme de calotte (15') de l'élément de compensation (15) est dimensionné de telle sorte que le point de rotation se trouve environ dans un plan formé par les bras élastiques (15").

5. Dispositif selon la revendication 3 ou 4,
**caractérisé en ce que**
l'extension axiale de l'élément de compensation (15) est calculée en fonction du diamètre intérieur radial de la partie d'entourage cylindrique du boîtier (11) concernée.

6. Dispositif selon l'une des revendications 2 à 5,
**caractérisé en ce que**
le diamètre de la zone configurée en forme de calotte (15') correspond à peu près au diamètre du ressort à boudin (14).

7. Dispositif selon l'une des revendications 3 à 6,
**caractérisé en ce que**
l'élément de compensation (15) présente en tant que surface d'appui plane pour l'extrémité du ressort à boudin (14) tournée vers l'élément de compensation (15) une partie intermédiaire (15''') de forme annulaire entourant de façon radiale la zone en forme de calotte (15'), un palier (15'''') en forme de gradin, s'étendant à peu près axialement en direction du ressort à boudin (14), étant respectivement disposé entre la périphérie de la partie intermédiaire (15''') et le bras élastique (15') respectivement associé.

8. Dispositif selon l'une des revendications 3 à 7,
**caractérisé en ce qu'**
au niveau de la paroi intérieure de la partie d'entourage cylindrique du boîtier (11) correspondante, associée à l'élément de compensation (15), il est prévu pour les bras élastiques (15") une collerette de butée (24), qui s'étend radialement vers l'intérieur sur toute la périphérie.

9. Dispositif selon l'une des revendications 3 à 8,
**caractérisé en ce que**
l'élément de compensation (15) présente six bras élastiques disposés à égale distance les uns des autres sur la périphérie.

10. Dispositif selon l'une des revendications 1 à 9,
**caractérisé en ce que**
l'élément de compensation (15) est en une seule pièce.
